# EUROPÄISCHE PATENTSCHRIFT

(11) **EP 4 041 804 B1**
(45) Veröffentlichungstag und Bekanntmachung des Hinweises auf die Patenterteilung: **05.07.2023**
(21) Anmeldenummer: 19787215.3
(22) Anmeldetag: 11.10.2019
(51) Int. Cl.: C08G 77/04, C08G 77/08

(54) **VERFAHREN ZUR HERSTELLUNG VON SILOXANEN AUS HYDRIDOSILICIUMVERBINDUNGEN**
PROCESS FOR PREPARING SILOXANES FROM HYDRIDOSILICON COMPOUNDS
PROCÉDÉ DE PRÉPARATION DE SILOXANES À PARTIR DE COMPOSÉS HYDRIDOSILICIUM

(43) Veröffentlichungstag der Anmeldung: 17.08.2022
(73) Patentinhaber: Wacker Chemie AG, 81737 München (DE)
(72) Erfinder: FRITZ-LANGHALS, Elke, 85521 Ottobrunn (DE); KNEISSL, Sotirios, 81739 München (DE); PIROUTEK, Phillip, 80805 München (DE)
(74) Vertreter: Fritz, Helmut
(86) Internationale Anmeldenummer: PCT/EP2019/077613
(87) Internationale Veröffentlichungsnummer: WO 2021/069081

(56) Entgegenhaltungen:
- EP-A1- 0 555 893
- WO-A1-2019/072378
- DE-A1-102016 205 526
- US-A1- 2007 148 474

## Beschreibung

Die Erfindung betrifft ein neuartiges Verfahren zur Herstellung von Siloxanen aus Hydridosiliciumverbindungen und Carbonylverbindungen in Gegenwart von kationischen Silicium(II)-, Germanium(II)-, und/oder Zinn(II)-Verbindungen.

Die Herstellung von Siloxanen ist ein wichtiger Prozess in der technischen Organosiliciumchemie. Die hydrolytische Kondensation von Chlorsilanen ist hierfür großtechnisch etabliert, jedoch erfordert die notwendige vollständige Abtrennung und Rückführung des gebildeten Chlorwasserstoffs einen erheblichen technischen Aufwand. Säurespuren können die Stabilität der Produkte herabsetzen, und müssen daher zwingend entfernt werden. Unter neutralen und aprotischen Reaktionsbedingungen besteht diese Gefahr nicht.

Ein Verfahren, welches diesen Bedingungen gerecht wird, ist die Piers-Rubinsztajn-Reaktion, bei der Hydridosiliciumverbindungen mit Alkoxysilanen unter Bildung des entsprechenden Siloxans und des Kohlenwasserstoffs in Gegenwart von B(C₆F₅)₃ als Katalysator nach der Gleichung

**Si-H** + **Si-OR** → **Si-O-Si** + **R-H**

umgesetzt werden.

Hydridosiliciumverbindungen (Si-H) bilden eine günstige Rohstoffbasis, die großtechnisch in großer Strukturvielfalt zur Verfügung steht. Bei den Alkoxysilanen (Si-OR) sind jedoch nur solche mit den Alkylresten Methyl oder Ethyl technisch verfügbar, dadurch werden bei der Piers-Rubinsztajn-Reaktion leichtentzündliche Gase wie Ethan oder Methan gebildet. Dieser Umstand stellt erhöhte Anforderungen an die Prozesssicherheit, verteuert den Prozess erheblich und kann das Verfahren letztendlich unwirtschaftlich machen. Es besteht somit ein Bedarf an einem Verfahren zur Herstellung von Siloxanen ausgehend von Hydridosiliciumverbindungen, welches diese Nachteile nicht aufweist.

Marks et al. (Catal. Sci. Technol. 2017, 7, 2165) beschreiben die Bildung von Ethern aus verschiedenen Carbonylverbindungen und Dimethylphenylsilan in Gegenwart eines geträgerten Dioxo-Molybdänkatalysators. Bei dieser Umsetzung wird PhMe₂Si-O-SiMe₂Ph als Nebenprodukt gebildet, zudem werden geringe Mengen an Alkohol gebildet. Die Umsetzung weiterer Hydridosiliciumverbindungen wird nicht gezeigt. Ketone reagieren deutlich langsamer als Aldehyde, die Reaktionstemperatur liegt bei 100 °C.

Hudnall et al. (Dalton Trans. 2016, 45, 11150) beschreiben die Bildung von Ethern aus Aldehyden und Triethylsilan in Gegenwart von 3-5 Mol-% einer kationischen Antimon-(V)-Verbindung, einem molaren Verhältnis von Aldehyd zu Triethylsilan von 1 : 3 und bei einer Reaktionstemperatur von 70 °C. Ursprünglich wurde bei der Umsetzung das Hydrosilylierungsprodukt erwartet. Es wird jedoch mit hoher Selektivität der Ether gebildet, Hexaethyldisiloxan wird nur als Nebenprodukt in geringen Mengen erhalten. Die Umsetzung von Ketonen wird nicht beschrieben. Von Nachteil sind die hohen Katalysatoranteile, die das Verfahren unwirtschaftlich machen.

Silyliumkatalysatoren sind im Stand der Technik bekannt und z.B. in der Dokumente DE 10 2016 205526 und WO 2019/072378 offenbart. In diesen Dokumenten katalysieren sie jedoch eine Hydrosilylierungsreaktion zwischen einem Silan oder Siloxan, das ein reaktives Wasserstoffatom aufweist und einer ethylenisch ungessätigten Verbindung.

Es wurde nun im Rahmen der vorliegenden Erfindung gefunden, dass Siloxane aus Hydridosiliciumverbindungen und Carbonylverbindungen in Gegenwart von kationischen Silicium(II)-, Germanium(II)- und/oder Zinn(II)-Verbindungen in einer selektiven und raschen Reaktion gebildet werden. Von Vorteil ist bei diesem Verfahren, dass eine große Vielfalt von Carbonylverbindungen technisch kostengünstig und in großer Strukturvielfalt zur Verfügung steht. Im Allgemeinen entstehen bei der Umsetzung keine gasförmigen Produkte, dies vereinfacht den Prozess erheblich. Zudem wird das Siloxan in sehr guten Ausbeuten erhalten.

Ein Gegenstand der Erfindung ist ein Verfahren zur Herstellung von Siloxanen, wobei
(a) mindestens eine Hydridosiliciumverbindung, die ausgewählt ist aus
   (a1) Verbindungen der allgemeinen Formel (I)

      **R¹R²R³Si-H** **(I),**
   worin die Reste **R¹, R²** und **R³** unabhängig voneinander ausgewählt werden aus der Gruppe bestehend aus (i) Wasserstoff, (ii) Halogen, (iii) unsubstituierter oder substituierter C₁-C₂₀-Kohlenwasserstoffrest, und (iv) unsubstituierter oder substituierter C₁-C₂₀-Kohlenwasserstoffoxyrest, wobei zwei der Reste **R¹, R²** und **R³** auch miteinander einen monocyclischen oder polycyclischen, unsubstituierten oder substituierten C₂-C₂₀-Kohlenwasserstoffrest bilden können, wobei substituiert jeweils meint, dass der Kohlenwasserstoff- oder Kohlenwasserstoffoxyrest unabhängig voneinander mindestens eine der folgenden Substitutionen aufweist: ein Wasserstoffatom kann durch Halogen, **-CH(=O), -C≡N, -OR^{z}, -SR^{z}, -NR^{z}₂,** und **-PR^{z}₂** ersetzt sein, eine CH₂-Gruppe kann durch **-O-**, **-S-** oder **-NR^{z}**-ersetzt sein, eine nicht direkt an Si gebundene CH₂-Gruppe kann durch eine Gruppierung **-C(=O)-** ersetzt sein, eine CH₃-Gruppe kann durch eine Gruppierung **-CH(=O)** ersetzt sein, und ein C-Atom kann durch ein Si-Atom ersetzt sein, worin **R^{z}** jeweils unabhängig voneinander ausgewählt wird aus der Gruppe bestehend aus C₁-C₆-Alkylrest und C₆-C₁₄-Arylrest; und/oder
   (a2) Verbindungen der allgemeinen Formel (**I'**)

      **(SiO_{4/2})ₐ(R^{x}SiO_{3/2})**_{b}**(HSiO_{3/2})_{b'}(R^{x}₂SiO_{2/2})_{c}(R^{x}HSiO_{2/2})_{c'}(H₂SiO_{2/2})_{c"}(R^{x}₃Si O_{1/2})_{d}(HR^{x}₂SiO_{1/2})_{d'}(H₂R^{x}SiO_{1/2})_{d"}(H₃SiO_{1/2})_{d‴}** **(I')**,
   worin die Reste **R^{x}** unabhängig voneinander ausgewählt werden aus der Gruppe bestehend aus (i) Halogen, (ii) unsubstituierter oder substituierter C₁-C₂₀-Kohlenwasserstoffrest, und (iii) unsubstituierter oder substituierter C₁-C₂₀-Kohlenwasserstoffoxyrest, wobei substituiert jeweils meint, dass der Kohlenwasserstoff- oder Kohlenwasserstoffoxyrest unabhängig voneinander mindestens eine der folgenden Substitutionen aufweist: ein Wasserstoffatom kann durch Halogen oder **-CH(=O)** ersetzt sein, eine CH₂-Gruppe kann durch **- O -** oder **-NR^{z}-** ersetzt sein, worin **R^{z}** jeweils unabhängig voneinander ausgewählt wird aus der Gruppe bestehend aus C₁-C₆-Alkylrest und C₆-C₁₄-Arylrest, eine nicht direkt an Si gebundene CH₂-Gruppe kann durch eine Gruppierung **-C(=O)-** ersetzt sein, und eine CH₃-Gruppe kann durch eine Gruppierung **-CH(=O)** ersetzt sein;
   und worin die Indices **a, b, b', c, c', c", d, d', d", d‴** die Anzahl der jeweiligen Siloxaneinheit in der Verbindung angeben und unabhängig voneinander eine ganze Zahl im Bereich von 0 bis 100.000 bedeuten, mit der Maßgabe, dass die Summe aus **a**, **b, b', c, c', c", d, d', d", d‴** zusammen mindestens den Wert 2 annimmt und wenigstens einer der Indices **b', c', c", d', d"** oder **d‴** ungleich 0 ist; und
(b) mindestens eine Carbonylverbindung, die ausgewählt ist aus
   (b1) Verbindungen der allgemeinen Formel (**II**)

      **R^{y}-C(=O)-R^{z}** **(II),**
   worin **R^{y}** ausgewählt wird aus der Gruppe bestehend aus (i) Wasserstoff, (ii) unsubstituierter oder substituierter C₁-C₂₀-Kohlenwasserstoffrest, und (iii) unsubstituierter oder substituierter C₁-C₂₀-Kohlenwasserstoffoxyrest;
   und worin **R^{z}** ausgewählt wird aus der Gruppe bestehend aus (i) Wasserstoff und (ii) unsubstituierter oder substituierter C₁-C₂₀-Kohlenwasserstoffrest; und/oder
   (b2) Verbindungen der allgemeinen Formel (**II'**)

      **(SiO_{4/2})ₐ(R^{x}SiO_{3/2})_{b}(R^{a}SiO_{3/2})_{b'}(R^{x}₂SiO_{2/2})_{c}(R^{x}R^{a}SiO_{2/2})_{c'}(R^{a}₂SiO_{2/2})_{c"}(R^{x}₃ SiO_{1/2})_{d}(R^{a}R^{x}₂SiO_{1/2})_{d'}(R^{a}₂R^{x}SiO_{1/2})_{d"}(R^{a}₃SiO_{1/2})_{d‴}** **(II'),**
   worin die Reste **R^{a}** unabhängig voneinander einen substituierten C₂-C₂₀-Kohlenwasserstoffrest bedeuten, wobei substituiert meint, dass der Kohlenwasserstoffrest unabhängig voneinander mindestens eine der folgenden Substitutionen aufweist: eine nicht direkt an Si gebundene CH₂-Gruppe kann durch eine Gruppierung **-C(=O)-** oder **-O-C(=O)-** ersetzt sein, ein Wasserstoffatom kann durch eine Gruppierung **-CH(=O)** ersetzt sein, und eine CH₃-Gruppe kann durch eine Gruppierung **-CH(=O)** ersetzt sein, optional kann der Kohlenwasserstoffrest folgende weitere Substitutionen aufweisen: ein Wasserstoffatom kann durch Halogen ersetzt sein, eine CH₂-Gruppe kann durch **- O** - oder **-NR^{z}-** ersetzt sein, worin **R^{z}** jeweils unabhängig voneinander ausgewählt wird aus der Gruppe bestehend aus C₁-C₆-Alkylrest und C₆-C₁₄-Arylrest;
   und worin die Reste **R^{x}** unabhängig voneinander ausgewählt werden aus der Gruppe bestehend aus (i) Halogen, (ii) Wasserstoff, (iii) unsubstituierter oder substituierter C₁-C₂₀-Kohlenwasserstoffrest, und (iv) unsubstituierter oder substituierter C₁-C₂₀-Kohlenwasserstoffoxyrest, wobei substituiert jeweils meint, dass der Kohlenwasserstoff- oder Kohlenwasserstoffoxyrest unabhängig voneinander mindestens eine der folgenden Substitutionen aufweist: ein Wasserstoffatom kann durch Halogen ersetzt sein, eine CH₂-Gruppe kann durch **- O -** oder **-NR^{z}-** ersetzt sein, worin **R^{z}** jeweils unabhängig voneinander ausgewählt wird aus der Gruppe bestehend aus C₁-C₆-Alkylrest und C₆-C₁₄-Arylrest;
   und worin die Indices **a, b, b', c, c', c", d, d', d", d‴** die Anzahl der jeweiligen Siloxaneinheit in der Verbindung angeben und unabhängig voneinander eine ganze Zahl im Bereich von 0 bis 100.000 bedeuten, mit der Maßgabe, dass die Summe aus **a, b, b', c, c', c", d, d', d", d‴** zusammen mindestens den Wert 2 annimmt und wenigstens einer der Indices **b', c', c", d', d"** oder **d‴** ungleich 0 ist; und
(c) mindestens eine kationische Verbindung der allgemeinen Formel (**III**)

   **([M(II)Cp]⁺)ₐ X^{a-}** **(III),**

   worin **M** ausgewählt ist aus der Gruppe bestehend aus Silicium und Germanium und **Cp** ein n-gebundener Cyclopentadienylrest der allgemeinen Formel **(IIIa)** ist 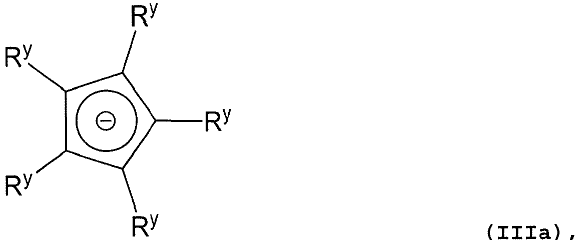
   worin die Reste **R^{y}** unabhängig voneinander ausgewählt werden aus der Gruppe bestehend aus (i) Triorganosilylrest der Formel - **SiR^{b}₃,** worin die Reste **R^{b}** unabhängig voneinander C₁-C₂₀-Kohlenwasserstoffrest bedeuten, (ii) Wasserstoff, (iii) unsubstituierter oder substituierter C₁-C₂₀-Kohlenwasserstoffrest, und (iv) unsubstituierter oder substituierter C₁-C₂₀-Kohlenwasserstoffoxyrest, wobei auch jeweils zwei Reste **R^{y}** miteinander einen monocyclischen oder polycyclischen C₂-C₂₀-Kohlenwasserstoffrest bilden können, und wobei substituiert jeweils meint, dass im Kohlenwasserstoff- oder Kohlenwasserstoffoxyrest auch mindestens ein C-Atom durch ein Si-Atom ersetzt sein kann,
      - **X^{a-}**: ein **a** wertiges Anion bedeutet und
      - **a**: die Werte 1, 2 oder 3 annehmen kann;
      in Kontakt gebracht und zur Reaktion gebracht werden.

Bei dem erfindungsgemäßen Verfahren werden außerdem Ether als weitere Reaktionsprodukte erhalten.

Es wird mindestens eine Hydridosiliciumverbindung eingesetzt, womit auch Mischungen von Verbindungen der allgemeinen Formel (**I**) und/oder Mischungen von Verbindungen der allgemeinen Formel **(I')** umfasst sind.

Bevorzugt werden in der allgemeinen Formel (**I**) die Reste **R¹, R²** und **R³** unabhängig voneinander ausgewählt aus der Gruppe bestehend aus (i) Wasserstoff, (ii) Chlor, (iii) unsubstituierter oder substituierter C₁-C₁₂-Kohlenwasserstoffrest, und (iv) unsubstituierter oder substituierter-C₁-C₁₂-Kohlenwasserstoffoxyrest, wobei substituiert dieselbe Bedeutung wie zuvor hat; und bevorzugt werden in der allgemeinen Formel **(I')** die Reste **R^{x}** unabhängig voneinander ausgewählt aus der Gruppe bestehend aus (i) Chlor, (ii) C₁-C₆-Alkylrest, (iii) Phenyl, und (iv) C₁-C₆-Alkoxyrest, und die Indices **a, b, b', c, c', c", d, d', d", d‴** werden unabhängig voneinander ausgewählt aus einer ganzen Zahl im Bereich von 0 bis 1.000.

Besonders bevorzugt werden in der allgemeinen Formel (**I**) die Reste **R¹, R²** und **R³** unabhängig voneinander ausgewählt aus der Gruppe bestehend aus (i) Wasserstoff, (ii) Chlor, (iii) C₁-C₆-Alkylrest, (iv) Phenyl, und (v) C₁-C₆-Alkoxyrest; und besonders bevorzugt werden in der allgemeinen Formel (**I'**) die Reste **R^{x}** unabhängig voneinander ausgewählt aus der Gruppe bestehend aus Chlor, Methyl, Methoxy, Ethyl, Ethoxy, n-Propyl, n-Propoxy, und Phenyl, und die Indices **a, b, b', c, c', c", d, d', d", d‴** werden unabhängig voneinander ausgewählt aus einer ganzen Zahl im Bereich von 0 bis 1.000.

Ganz besonders bevorzugt werden in der allgemeinen Formel (**I**) die Reste **R¹, R²** und **R³** und in der allgemeinen Formel (**I'**) die Reste **R^{x}** unabhängig voneinander ausgewählt aus der Gruppe bestehend aus Wasserstoff, Chlor, Methyl, Methoxy, Ethyl, Ethoxy, n-Propyl, n-Propoxy, und Phenyl, und die Indices **a, b, b', c, c', c", d, d', d", d‴** werden bevorzugt unabhängig voneinander ausgewählt aus einer ganzen Zahl im Bereich von 0 bis 1.000.

Eine Mischung von Verbindungen der Formel **(I')** liegt insbesondere bei Polysiloxanen vor. Der Einfachheit halber werden für Polysiloxane jedoch nicht die einzelnen Verbindungen der Mischung angegeben, sondern es wird eine der Formel (**I'**) ähnliche mittlere Formel (**I'a**) angegeben:

**(SiO_{4/2})ₐ(R^{x}SiO_{3/2})_{b}(HSiO_{3/2})_{b'}(R^{x}₂SiO_{2/2})_{c}(R^{x}HSiO_{2/2})_{c'}(H₂SiO_{2/2})_{c"}(R^{x}₃Si O_{1/2})_{d}(HR^{x}₂SiO_{1/2})_{d'}(H₂R^{x}SiO_{1/2})_{d"}(H₃SiO_{1/2})_{d‴}** **(I'a),**

worin die Reste **R^{x}** dieselbe Bedeutung wie in Formel **(I')** haben, die Indices **a, b, b', c, c', c", d, d', d", d‴** jedoch unabhängig voneinander eine Zahl im Bereich von 0 bis 100.000 bedeuten und den mittleren Gehalt der jeweiligen Siloxaneinheit in der Mischung angeben. Bevorzugt werden solche Mischungen der mittleren Formel (**I'a**) ausgewählt, worin die Indices **a, b, b', c, c', c", d, d', d" , d‴** unabhängig voneinander ausgewählt werden aus einer Zahl im Bereich von 0 bis 20.000.

Beispiele für Hydridosiliciumverbindungen der allgemeinen Formel (**I**) sind die folgenden Silane (Ph = Phenyl, Me = Methyl, Et = Ethyl):
Me₃SiH, Et₃SiH, Me₂PhSiH, MePh₂SiH, PhCl₂SiH, Me₂ClSiH, Et₂ClSiH, MeCl₂SiH, Cl₃SiH, Cl₂SiH₂, Me₂(MeO)SiH, Me(MeO)₂SiH, (MeO)₃SiH, Me₂(EtO)SiH, Me(EtO)₂SiH, (EtO)₃SiH,
Me₂SiH₂, Et₂SiH₂, MePhSiH₂, Ph₂SiH₂, PhClSiH₂, MeClSiH₂, EtClSiH₂, Cl₂SiH₂, Me(MeO)SiH₂, (MeO)₂SiH₂, Me₂(EtO)SiH, (EtO)₂SiH₂ und PhSiH₃ und 1,4-Bis(dimethylsilyl)benzol.

Beispiele für Hydridosiliciumverbindungen der allgemeinen Formel (**I'**) sind die folgenden Siloxane und Polysiloxane: HSiMe₂-O-SiMe₃, HSiMe₂-O-SiMe₂H, Me₃Si-O-SiHMe-O-SiMe₃, H-SiMe₂-(O-SiMe₂)ₘ-O-SiMe₂-H mit m = 1 bis 20.000, Me₃Si-O-(SiMe₂-O)ₙ(SiHMe-O)ₒ-SiMe₃ mit n = 1 bis 20.000 und o = 1 bis 20.000.

Es wird mindestens eine Carbonylverbindung eingesetzt, womit auch Mischungen von Verbindungen der allgemeinen Formel (**II**) und/oder Mischungen von Verbindungen der allgemeinen Formel (**II'**) umfasst sind.

Bevorzugt werden in Formel (**II**) die Reste **R^{y}** ausgewählt aus der Gruppe bestehend aus (i) Wasserstoff, (ii) unsubstituierter C₁-C₈-Kohlenwasserstoffrest und (iii) unsubstituierter C₁-C₈-Kohlenwasserstoffoxyrest, und die Reste **R^{z}** werden ausgewählt aus der Gruppe bestehend aus (i) Wasserstoff und (ii) unsubstituierter C₁-C₈-Kohlenwasserstoffrest; und bevorzugt werden in Formel (**II'**) die Reste **R^{a}** ausgewählt aus der Gruppe bestehend aus substituierten C₁-C₈-Kohlenwasserstoffresten und die Substituenten sind dieselben wie zuvor, und die Reste **R^{x}** werden ausgewählt aus (i) unsubstituierter C₁-C₈-Kohlenwasserstoffrest und (ii) unsubstituierter C₁-C₈-Kohlenwasserstoffoxyrest.

Besonders bevorzugt werden in Formel (**II**) die Reste **R^{y}** ausgewählt aus der Gruppe bestehend aus (i) Wasserstoff, (ii) C₁-C₈-Alkylrest und (iii) C₁-C₈-Alkoxyrest, und die Reste **R^{z}** werden ausgewählt aus der Gruppe bestehend aus (i) Wasserstoff, (ii) C₁-C₈-Alkylrest und (iii) Phenylrest; und besonders bevorzugt werden in Formel (**II'**) die Reste **R^{a}** ausgewählt aus der Gruppe bestehend aus substituierten C₁-C₈-Kohlenwasserstoffresten und die Substituenten sind dieselben wie zuvor, und die Reste **R^{x}** werden ausgewählt aus unsubstituierter C₁-C₈-Kohlenwasserstoffrest.

Es wird mindestens eine kationische Verbindung eingesetzt, wobei auch Mischungen von Verbindungen der allgemeinen Formel (**III**) umfasst sind.

In Formel (**III**) ist **M** besonders bevorzugt Silicium.

Beispiele für Reste **R^{y}** in Formel (**IIIa**) sind Alkylreste, wie der Methyl-, Ethyl-, n-Propyl-, iso-Propyl-, n-Butyl-, sec-Butyl-, iso-Butyl-, tert.-Butyl-, n-Pentyl-, sec-Pentyl, isoPentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,4,4-Trimethylpentylrest; Nonylreste, wie der n-Nonylrest; Decylreste, wie der n-Decylrest; Dodecylreste, wie der n-Dodecylrest; Hexadecylreste, wie der n-Hexadecylrest; Octadecylreste, wie der n-Octadecylrest; Cycloalkylreste, wie der Cyclopentyl-, Cyclohexyl-, Cycloheptylrest und Methylcyclohexylrest; Arylreste, wie der Phenyl-, Naphthyl-, Anthracen- und Phenanthrenrest; Alkarylreste, wie der o-, mund p-Tolyl-, Xylyl-, Mesitylenyl- und o-, m- und p-Ethylphenylrest; Alkarylreste, wie der Benzylrest, der α- und der β-Phenylethylrest; und Alkylsilylreste wie Trimethylsilyl, Triethylsilyl, Tripropylsilyl, Dimethylethylsilyl, Dimethyltert-butylsilyl und Diethylmethylsilylrest.

Bevorzugt werden in Formel (**IIIa**) die Reste **R^{y}** unabhängig voneinander ausgewählt aus der Gruppe bestehend aus (i) C₁-C₃-Alkylrest, (ii) Wasserstoff und (iii) Triorganosilylrest der Formel **-SiR^{b}₃**, worin die Reste **R^{b}** unabhängig voneinander C₁-C₂₀-Alkylrest bedeuten. Besonders bevorzugt werden die Reste **R^{y}** unabhängig voneinander ausgewählt aus Methylrest, Wasserstoff und Trimethylsilylrest. Ganz besonders bevorzugt sind alle Reste **R^{y}** ein Methylrest.

Der Index **a** in Formel (**III**) ist bevorzugt 1, sodass **X⁻** ein einwertiges Anion bedeutet.

Beispiele für Anionen **X⁻** sind:
Halogenide;
Chlorat **ClO₄⁻**;
Tetrachlorometallate **[MCl₄]⁻** mit **M** = Al, Ga;
Tetrafluoroborate **[BF₄]⁻**;
Trichlorometallate **[MCl₃]⁻** mit **M** = Sn, Ge;
Hexafluorometallate **[MF₆]**⁻ mit **M** = As, Sb, Ir, Pt;
Perfluoroantimonate **[Sb₂F₁₁]⁻, [Sb₃F₁₆]⁻** und **[Sb₄F₂₁]⁻;**
Triflat (= Trifluoromethansulfonat) **[OSO₂CF₃]⁻;**
Tetrakis(trifluormethyl)borat **[B(CF₃)₄]⁻;**
Tetrakis(pentafluorophenyl)metallate **[M(C₆F₅)₄]⁻** mit **M** = Al, Ga;
Tetrakis(pentachlorophenyl)borat **[B(C₆Cl₅)₄]⁻;**
Tetrakis[(2,4,6-trifluoromethyl(phenyl)]borat **{B[C₆H₂(CF₃)₃]}⁻;**
Hydroxybis[tris(pentafluorphenyl)borat] **{HO[B(C₆F₅)₃]₂}⁻;**
Closo-Carborate **[CHB₁₁H₅Cl₆]⁻, [CHB₁₁H₅Br₆]⁻, [CHB₁₁(CH₃)₅Br₆]**⁻, **[CHB₁₁F₁₁]⁻, [C(Et)B₁₁F₁₁]⁻, [CB₁₁(CF₃)₁₂]⁻** und **B₁₂Cl₁₁N(CH₃)₃]⁻;**
Tetra (perfluoroalkoxy) aluminate **[Al(OR^{PF})₄]⁻** mit **R^{PF}** = unabhängig voneinander perfluorierter C₁-C₁₄-Kohlenwasserstoffrest;
Tris (perfluoroalkoxy) fluoroaluminate **[FAl(OR^{PF})₃]⁻** mit **R^{PF}** = unabhängig voneinander perfluorierter C₁-C₁₄-Kohlenwasserstoffrest ;
Hexakis(oxypentafluorotellur)antimonat **[Sb(OTeF₅)₆]⁻;**
Borate und Aluminate der Formeln **[B(R^{a})₄]⁻** und **[Al(R^{a})₄]⁻,** worin die Reste **R^{a}** jeweils unabhängig voneinander ausgewählt werden aus aromatischer C₆-C₁₄-Kohlenwasserstoffrest, bei dem mindestens ein Wasserstoffatom unabhängig voneinander durch einen Rest ausgewählt aus der Gruppe bestehend aus (i) Fluor, (ii) perfluorierter C₁-C₆-Alkylrest, und (iii) Triorganosilylrest der Formel **-SiR^{b}₃,** worin die Reste **R^{b}** unabhängig voneinander C₁-C₂₀-Alkylrest bedeuten, substituiert ist.

Bevorzugt werden in Formel **(III)** die Anionen **X⁻** ausgewählt aus der Gruppe bestehend aus den Verbindungen der Formeln **[B(R^{a})₄]⁻** und **[Al(R^{a})₄]⁻,** worin die Reste **R^{a}** jeweils unabhängig voneinander ausgewählt werden aus aromatischer C₆-C₁₄-Kohlenwasserstoffrest, bei dem mindestens ein Wasserstoffatom unabhängig voneinander durch einen Rest ausgewählt aus der Gruppe bestehend aus (i) Fluor, (ii) perfluorierter C₁-C₆-Alkylrest, und (iii) Triorganosilylrest der Formel - **SiR^{b}₃,** worin die Reste **R^{b}** unabhängig voneinander C₁-C₂₀-Alkylrest bedeuten, substituiert ist.

Beispiele für Reste **R^{a}** sind m-Difluorphenylrest, 2,2,4,4-Tetrafluorphenylrest, perfluorierter 1-Naphthylrest, perfluorierter 2-Naphthylrest, Perfluorbiphenylrest, - C₆F₅, - C₆H₃(m-CF₃)₂, - C₆H₄(p-CF₃), - C₆H₂(2,4,6-CF₃)₃, - C₆F₃(m-SiMe₃)₂, - C₆F₄(p-SiMe₃), - C₆F₄(p-SiMe₂t-butyl).

Besonders bevorzugt werden in Formel **(III)** die Anionen **X⁻** ausgewählt aus der Gruppe bestehend aus den Verbindungen der Formel **[B(R^{a})₄]⁻,** worin die Reste **R^{a}** unabhängig voneinander ausgewählt werden aus aromatischer C₆-C₁₄-Kohlenwasserstoffrest, bei dem alle Wasserstoffatome unabhängig voneinander durch einen Rest, ausgewählt aus der Gruppe bestehend aus (i) Fluor und (ii) Triorganosilylrest der Formel **-SiR^{b}₃,** worin die Reste **R^{b}** unabhängig voneinander C₁-C₂₀-Alkylrest bedeuten, substituiert sind.

Ganz besonders bevorzugt werden in Formel **(III)** die Anionen **X⁻** ausgewählt aus der Gruppe bestehend aus den Verbindungen der Formel **[B(R^{a})₄]⁻,** worin die Reste **R^{a}** unabhängig voneinander ausgewählt werden aus der Gruppe bestehend aus **-C₆F₅,** perfluorierter 1- und 2-Naphthylrest, **-C₆F₃(SiR^{b}₃)₂** und **-C₆F₄(SiR^{b}3),** worin die Reste **R^{b}** jeweils unabhängig voneinander C₁-C₂₀-Alkylrest bedeuten.

Am meisten bevorzugt werden in Formel **(III)** die Anionen **X-**ausgewählt aus der Gruppe bestehend aus **[B(C₆F₅)₄]⁻, [B(C₆F₄(4-TBS)₄]⁻** mit TBS = SiMe₂*tert*-Butyl, **[B(2-NaphF)₄]⁻** mit 2-NaphF = perfluorierter 2-Naphthylrest und **[B(C₆F₅)₃(2-NaphF)]⁻** mit 2-NaphF = perfluorierter 2-Naphthylrest.

Bevorzugte Verbindungen der Formel **(III)** sind solche, in denen alle Reste **R^{y}** Methyl bedeuten und die Anionen **X-** ausgewählt werden aus der Gruppe bestehend aus den Verbindungen der Formeln **[B(R^{a})₄]⁻,** worin die Reste **R^{a}** unabhängig voneinander ausgewählt werden aus aromatischer C₆-C₁₄-Kohlenwasserstoffrest, bei dem mindestens ein Wasserstoffatom unabhängig voneinander durch einen Rest ausgewählt aus der Gruppe bestehend aus (i) Fluor, (ii) perfluorierter C₁-C₆-Alkylrest, und (iii) Triorganosilylrest der Formel **-SiR^{b}₃,** worin die Reste **R^{b}** unabhängig voneinander C₁-C₂₀-Alkylrest bedeuten, substituiert ist.

Besonders bevorzugt werden kationische Verbindungen der Formel **(III)** ausgewählt aus der Gruppe bestehend aus **Cp*M⁺ B(C₆F₅)₄⁻; Cp*M⁺ B[C₆F₄(4-TBS)]₄⁻,** mit TBS = **SiMe₂*tert*-Butyl; Cp*M⁺ B(2-NaphF)₄⁻,** mit 2-NaphF = perfluorierter 2-Naphthylrest; und
**Cp*M⁺ B[(C₆F₅)₃(2-NaphF)]⁻,** mit 2-NaphF = perfluorierter 2-Naphthylrest, wobei **M** ausgewählt ist aus der Gruppe bestehend aus Silicium und Germanium und Cp* Pentamethylcyclopentadienyl bedeutet.

In einer besonderen Ausführungsform des erfindungsgemäßen Verfahrens weist die Verbindung der Formel (**I**) zwei siliciumgebundene Wasserstoffatome auf, wobei die Reste **R¹** und **R²** dieselbe Bedeutung haben wie zuvor: **R¹R²SiH₂.**

In diesem Fall können bei der Umsetzung mit Carbonylverbindungen lineare Polysiloxane hergestellt werden (vgl. Reaktionsschema 1, gilt für Aldehyde und Ketone). Das gilt auch, wenn Verbindungen der Formel **(I')** mit zwei endständigen Si-H-Gruppierungen eingesetzt werden.

**(n+2) R¹R²SiH₂** + **(n+1) R^{y}R^{z}C=O** → **HR¹R²Si-(O-SiR¹R²)ₙ-O-SiR¹R²H** + **(n+1) R^{y}R^{z}CH-O-CHR^{y}R^{z}** **(Reaktionsschema 1)**

In einer weiteren besonderen Ausführungsform des erfindungsgemäßen Verfahrens werden Copolymere erhalten, wenn zwei oder mehrere verschiedene Verbindungen der Formel (**I**) mit jeweils zwei siliciumgebundenen Wasserstoffatomen eingesetzt werden. Das gilt auch, wenn zwei oder mehr verschiedene Verbindungen der Formel **(I')** mit zwei endständigen Si-H-Gruppierungen eingesetzt werden.

Enthält die Verbindung der Formel **(I)** bzw. **(I')** mindestens drei Silicium-gebundene Wasserstoffe, so werden verzweigte oder vernetzte Siloxane gebildet.

In einer weiteren Ausführungsform enthält die Verbindung der Formel **(I')** mehrere Si-H Gruppierungen und mehrere Carbonylgruppierungen. Bei der Umsetzung werden dann ebenfalls vernetzte Siloxane erhalten.

Die Reaktanden und der Katalysator können in beliebiger Reihenfolge miteinander in Kontakt gebracht werden. Vorzugsweise bedeutet in Kontakt bringen, dass die Reaktanden und der Katalysator vermischt werden, wobei das Vermischen in einer dem Fachmann bekannten Weise erfolgt. Beispielsweise können die Verbindungen der Formel **(I)** bzw. **(I')** und **(II)** bzw. **(II')** miteinander vermischt werden und dann die Verbindung der Formel **(III)** zugegeben werden. Ebenso ist es möglich, zunächst die Verbindungen der Formel **(I)** bzw. **(I')** oder **(II)** bzw. **(II')** mit der Verbindung der Formel **(III)** zu mischen, und dann die noch fehlende Verbindung hinzuzufügen.

Das molare Verhältnis zwischen den vorhandenen direkt an Silicium gebundenen Wasserstoffatomen und Carbonylgruppierungen liegt üblicherweise im Bereich von 1:100 bis 100:1, bevorzugt liegt das molare Verhältnis im Bereich von 1:10 bis 10:1, besonders bevorzugt im Bereich 1:2 bis 2:1.

Der molare Anteil der Verbindung der Formel **(III)** bezogen auf die vorhandenen Si-H-Gruppierungen der Verbindung der Formel **(I)** bzw. **(I')** liegt bevorzugt im Bereich von 0,0001 mol-% bis 10 mol-%, besonders bevorzugt im Bereich von 0,001 mol-% bis 1 mol-%, ganz besonders bevorzugt im Bereich von 0,01 mol-% bis 0,1 mol %

Die erfindungsgemäße Umsetzung kann ohne Lösemittel oder mit Zusatz eines oder mehrerer Lösemittel durchgeführt werden. Der Anteil des Lösemittels oder des Lösemittelgemisches beträgt bezogen auf die Verbindung der Formel **(I)** bzw. **(I')** bevorzugt mindestens 0,01 Gew.-% und höchstens die 1000-fache Gewichtsmenge, besonders bevorzugt mindestens 1 Gew.-% und höchstens die 100-fache Gewichtsmenge, ganz besonders bevorzugt mindestens 10 Gew.-% und höchstens die 10-fache Gewichtsmenge. Bevorzugt wird die Verbindung der Formel **(III)** vor der Umsetzung in einem Lösungsmittel gelöst.

Als Lösemittel können bevorzugt aprotische Lösemittel, beispielsweise Kohlenwasserstoffe wie Pentan, Hexan, Heptan, Cyclohexan oder Toluol, Chlorkohlenwasserstoffe wie Dichlormethan, Chloroform, Chlorbenzol oder 1,2-Dichlorethan, Ether wie Diethylether, Methyl-tert.-butylether, Anisol, Tetrahydrofuran oder Dioxan, oder Nitrile wie z.B. Acetonitril oder Propionitril, eingesetzt werden.

Lösemittel oder Lösemittelgemische mit einem Siedepunkt bzw. Siedebereich von bis zu 120 °C bei 0,1 MPa sind bevorzugt.

Bevorzugt handelt es sich bei den Lösemitteln um chlorierte und nicht chlorierte aromatische oder aliphatische Kohlenwasserstoffe.

Der Druck der Umsetzung kann vom Fachmann frei gewählt werden, sie kann unter Umgebungsdruck oder unter vermindertem oder unter erhöhtem Druck durchgeführt werden. Der Druck liegt bevorzugt in einem Bereich von 0,01 bar bis 100 bar, besonders bevorzugt in einem Bereich von 0,1 bar bis 10 bar, ganz besonders bevorzugt wird die Umsetzung bei Umgebungsdruck durchgeführt. Sind jedoch an der erfindungsgemäßen Reaktion Verbindungen **I** bzw. **II** beteiligt, die bei der Reaktionstemperatur gasförmig vorliegen, erfolgt bevorzugt eine Umsetzung unter erhöhtem Druck, besonders bevorzugt bei dem Dampfdruck des Gesamtsystems.

Der Fachmann kann die Temperatur der Reaktion frei wählen. Sie erfolgt bevorzugt bei einer Temperatur im Bereich von - 40 °C bis + 200 °C, besonders bevorzugt im Bereich von -10 °C bis + 150 °C, ganz besonders bevorzugt im Bereich von + 10 °C bis + 120°C.

Das erfindungsgemäße Verfahren kann beispielsweise auch zur Entfernung geringer Anteile an Si-H-Gruppierungen eingesetzt werden, die als labile und daher oftmals in Anwendungen störende Verunreinigungen in Produkten vorhanden sind, die über andere Prozesse hergestellt wurden, indem diese mit einer Verbindung der Formel (**II**) bzw. (**II'**) in Gegenwart einer Verbindung der Formel (**III**) umgesetzt werden. Die reaktiven Si-H-Gruppierungen werden hierbei in inerte Si-O-Si-Gruppierungen umgewandelt.

### Beispiele

### Beispiel 1: Umsetzung von Triethylsilan mit Hexanal

Unter Argonatmosphäre wurde eine Lösung von 1,3 mg
Cp*Si⁺ B(C₆F₅)₄- (1,5 µmol, 0,059 mol-%) in 940 mg Dichlormethan vorgelegt und dann 30,2 mg (2,60 mmol) Triethylsilan und 259 mg (2,59 mmol) Hexanal zugegeben. Die Reaktion war exotherm und nach 0,5 h vollständig.

Die Ausbeute an Hexaethyldisiloxan betrug 99 % (GC-Analyse) des theoretischen Wertes.

### Beispiel 2: Umsetzung von Triethylsilan mit Hexanal

299 mg (2,57 mmol) Triethylsilan und 257 mg (2,57 mmol) Hexanal wurden gemischt. Zu dieser Mischung wurden 2,8 mg (3,2 µmol, 0,12 mol-% bezogen auf Hexanal) Cp*Ge⁺ B(C₆F₅)₄- als Lösung in 780 mg Dichlormethan langsam hinzugetropft. Nach einer Stunde bei 50 °C war die Umsetzung vollständig.

Die Ausbeute an Hexaethyldisiloxan betrug 98 % (GC-Analyse) des theoretischen Wertes.

¹H-NMR (CD₂Cl₂) : δ = 0,54 (m, 6 CH₂), 0,95 ppm (6 CH₃)

### Beispiel 3: Umsetzung von Triethylsilan mit Ethylmethylketon

Unter Argonatmosphäre wurde eine Lösung von 1,1 mg
Cp*Si⁺ B(C₆F₅)₄- (1,3 µmol, 0,05 mol-% bezogen auf Triethylsilan) in 853 mg Dichlormethan vorgelegt, dann wurden 301 mg (2,59 mmol) Triethylsilan und 188 mg (2,60 mmol) Ethylmethylketon zugegeben. Die Reaktion war stark exotherm und nach 0,5 h vollständig.

Die Ausbeute an Hexaethyldisiloxan betrug 81 % (GC-Analyse) des theoretischen Wertes.

### Beispiel 4: Umsetzung von Triethylsilan mit Ethylmethylketon

Unter Argonatmosphäre wurde eine Lösung von 3,5 mg
Cp*Si+ B(C₆F₅)₄- (4,15 µmol, 0,05 mol-% bezogen auf Triethylsilan) in 15 g Dichlormethan vorgelegt und dann 1011 mg (8,70 mmol) Triethylsilan zugegeben. Die auf - 74 °C gekühlte Lösung wurde mit 629 mg (8,72 mmol) Ethylmethylketon versetzt. Die Reaktionslösung wurde dann langsam auf Raumtemperatur gebracht. Nach 1,5 h bei Raumtemperatur wurden 76 % Hexaethyldisiloxan gebildet (GC-Analyse), ausgehend vom theoretischen Wert.

### Beispiel 5: Umsetzung von Dimethylchlorsilan mit Ethylmethylketon

Unter Argon wurde 0,5 mg Cp*Ge⁺ B(C₆F₅)₄⁻ (0,56 µmol, 0,021 mol-% bezogen auf 2-Butanon) in 660 mg Dichlormethan gelöst. Zu dieser Lösung wurde eine Mischung aus 252 mg (2,66 mmol) Dimethylchlorsilan und 195 mg (2,70 mmol) Ethylmethylketon hinzugegeben. Es wurde eine exotherme Reaktion beobachtet. Nach 24 Stunden bei Raumtemperatur hatte sich 1,3-Dichlor-l,1,3,3-tetramethyldisiloxan gebildet (GC-Analyse), ausgehend vom theoretischen Wert.

### Beispiel 6: Umsetzung von Pentamethyldisiloxan mit Hexanal

Unter Argonatmosphäre wurde eine Lösung von 3,2 mg
Cp*Ge⁺ B(C₆F₆)₄⁻ (3,6 µmol, 0,05 mol-% bezogen auf Pentamethyldisiloxan) in 15,6 g Dichlormethan und 1,00 g (6,77 mmol) Pentamethyldisiloxan vorgelegt. Die auf + 2 °C gekühlte Lösung wurde mit 676 mg (6,75 mmol) Hexanal versetzt. Die Reaktionslösung wurde langsam auf Raumtemperatur gebracht und dann 18 h bei Raumtemperatur gerührt.

Die Ausbeute an Dekamethyltetrasiloxan betrug 56 % (GC-Analyse) des theoretischen Wertes.

### Beispiel 7: Umsetzung von Triethylsilan mit Acetophenon

Unter Argonatmosphäre wurde eine Lösung von 1,2 mg
Cp*Si⁺ B(C₆F₅)₄⁻ (1,4 µmol, 0,055 mol-% bezogen auf Triethylsilan) in 860 mg Dichlormethan vorgelegt und dann 312 mg (2,59 mmol) Triethylsilan und 312 mg (2,60 mmol) Acetophenon zugegeben. Die Reaktionslösung wurde 15 Minuten auf 70 °C erhitzt.

Die Ausbeute an Hexaethyldisiloxan betrug 98 % (GC-Analyse) des theoretischen Wertes.

### Beispiel 8: Umsetzung von Triethylsilan mit Acetophenon (1:1)

Unter Argon wurde eine Mischung aus 301 mg (2,59 mmol) Triethylsilan, 313 mg (2,61 mg) Acetophenon und 340 mg CD₂Cl₂ hergestellt. Diese Mischung langsam wurde zu einer Lösung von 2,3 mg (2,6 µmol, 0,10 mol-% bezogen auf Acetophenon)
Cp*Ge⁺ B(C₆F₅)₄⁻ in 713 mg Dichlormethan getropft. Nach 24 Stunden bei 50 °C war Triethylsilan vollständig abreagiert. Die Ausbeute an Hexaethyldisiloxan betrug 98 % (GC-Analyse) des theoretischen Wertes.

### Beispiel 9: Umsetzung von Triethylsilan mit Acetophenon (2:1)

Unter Argon wurde eine Mischung aus 399 mg (3,43 mmol) Triethylsilan, 210 mg (1,75 mg) Acetophenon und 370 mg CD₂Cl₂ hergestellt. Diese Mischung wurde langsam zu einer Lösung von 3,1 mg (3,5 µmol, 0,20 mol-% bezogen auf Acetophenon) Cp*Ge+ B(C₆F₅)₄- in 380 mg Dichlormethan getropft. Nach 23 Stunden bei 50 °C war die Umsetzung vollständig.

Die Ausbeute an Hexaethyldisiloxan betrug 99 % (GC-Analyse) des theoretischen Wertes.

### Beispiel 10: Umsetzung von Triethylsilan mit Essigsäureethylester

304 mg (2,61 mmol) Triethylsilan und 116 mg (1,32 mmol) Essigsäureethylester wurden gemischt. Zu dieser Mischung wurde eine Lösung von 1,2 mg (1,4 µmol, 0,11 mol-% bezogen auf Essigsäureethylester) Cp*Ge⁺ B(C₆F₅)₄⁻ in 346 mg Dichlormethan gegeben. Die Reaktionsmischung wurde 16 Stunden auf 70 °C erwärmt. Triethylsilan war vollständig abreagiert.

Die Ausbeute an Hexaethyldisiloxan betrug 43 % (GC-Analyse) des theoretischen Wertes.

### Beispiel 11: Umsetzung von Triethylsilan mit Essigsäureethylester

302 mg (2,60 mmol) Triethylsilan und 117 mg (1,33 mmol) Essigsäureethylester würden gemischt. Zu dieser Mischung wurde eine Lösung von 1,1 mg (1,3 µmol, 0,098 mol-%) Cp*Si⁺ B(C₆F₅)₄⁻ in 346 mg Dichlormethan gegeben. Die Reaktionsmischung wurde 16 Stunden auf 70 °C erwärmt. Triethylsilan war vollständig abreagiert.

Die Ausbeute an Hexaethyldisiloxan betrug 50 % (GC-Analyse) des theoretischen Wertes.

### Beispiel 12: Umsetzung von Triethylsilan mit Propionsäureethylester

300 mg (2,58 mmol) Triethylsilan und 130 mg (1,27 mmol) Propionsäureethylester wurden gemischt. Zu dieser Mischung wurde eine Lösung von 1,2 mg (1,4 µmol, 0,11 mol-%)
Cp*Ge⁺ B(C₆F₅)₄⁻ in 360 mg Dichlormethan gegeben. Die Reaktionsmischung wurde 16 Stunden auf 70 °C erwärmt. Triethylsilan war vollständig abreagiert.

Die Ausbeute an Hexaethyldisiloxan betrug 56 % (GC-Analyse) des theoretischen Wertes.

### Beispiel 13: Umsetzung von 1,1,3,3-Tetramethyldisiloxan mit Hexanal (Synthese eines linearen Siloxanpolymers)

1,00 g (7,46 mmol) 1,1,3,3-Tetramethyldisiloxan, 1,49 g (14,9 mmol) Hexanal und 6,5 g Dichlormethan wurden gemischt und unter Rühren bei 10 °C mit einer Lösung von 1,7 mg (2,02 µmol, 0,03 mol-%) Cp*Si⁺ B(C₆F₅)₄⁻ in 1 g Dichlormethan versetzt. Die Lösung erwärmte sich bis auf 40 °C und erreichte dann wieder Umgebungstemperatur (25 °C). Nach einer Gesamtreaktionsdauer von 2 Stunden war NMR-spektroskopisch kein Si-H mehr nachweisbar. ²⁹Si-NMR (CD₂Cl₂) : δ = - 6,78 (Si-H Kettenende), - 19,8 (HSi-O-SiMe₂O-), -21,8 (SiMe₂O-Kettenglied), berechnete mittlere Kettenlänge: 42 Siliconeinheiten.

### Beispiel 14: Umsetzung von 1,1,3,3-Tetramethyldisiloxan und Diethylsilan mit Hexanal (Synthese eines linearen Siloxancopolymers)

0,50 g (3,74 mmol) 1,1,3,3-Tetramethyldisiloxan, 0,329 mg (3,73 mmol) Diethylsilan, 1,49 g (14,9 mmol) Hexanal und 6,5 g Dichlormethan wurden gemischt und unter Rühren bei 25 °C mit einer Lösung von 1,6 mg (1,90 µmol, 0,025 mol-%) Cp*Si⁺ B(C₆F₅)₄⁻ in 1,1 g Dichlormethan versetzt. Nach einer

Gesamtreaktionsdauer von ca. 2 Tagen war ¹H-NMR-spektroskopisch kein Si-H mehr nachweisbar. Die Reaktionslösung wurde im Vakuum eingedampft. GPC-Messung: Mₙ = 3.830, M_{w} = 12.316, D = 3,2.

### Beispiel 15: Umsetzung von 1,1,3,3-Tetramethyldisiloxan und Diphenylsilan mit Hexanal (Synthese eines Siloxancopolymers)

0,50 g (3,74 mmol) 1,1,3,3-Tetramethyldisiloxan, 0,687 mg (3,73 mmol) Diphenylsilan, 1,49 g (14,9 mmol) Hexanal und 4,7 g Dichlormethan wurden gemischt und unter Rühren bei 20 °C mit einer Lösung von 1,4 mg (1,90 µmol, 0,022 mol-%) Cp*Si⁺ B(C₆F₅)₄-in 1,1 g Dichlormethan versetzt. Man erwärmte die Lösung 22 Stunden auf 60 °C Badtemperatur, nach dieser Zeit war die Umsetzung vollständig (keine Si-H-Signale im ¹H-NMR-Spektrum nachweisbar). Die Reaktionslösung wurde im Vakuum eingedampft. GPC-Messung: Mₙ = 3.375, M_{w} = 7.755, D = 2,3.

### Beispiel 16: Umsetzung von 1,1,3,3-Tetramethyldisiloxan und 1,4-Bis(dimethylsilyl)benzol mit Hexanal (Synthese eines Siloxancopolymers)

0,52 g (3,74 mmol) 1,1,3,3-Tetramethyldisiloxan, 0,728 mg (3,74 mmol) 1,4-Bis(dimethylsilyl)benzol, 1,49 g (14,9 mmol) Hexanal und 3,1 g Dichlormethan wurden gemischt und unter Rühren bei 25 °C mit einer Lösung von 1,5 mg (1,78 µmol, 0,024 mol-%) Cp*Si⁺ B(C₆F₅)₄- in 1,1 g Dichlormethan versetzt. Die Lösung erwärmte sich bis auf 40 °C und erreichte dann wieder Umgebungstemperatur (25 °C). Nach 22 Stunden Gesamtreaktionszeit war die Umsetzung vollständig (keine Si-H-Signale im ¹H-NMR-Spektrum nachweisbar). Die Reaktionslösung wurde im Vakuum eingedampft. GPC-Messung: Mₙ = 2.581,

M_{w} = 7.819, D = 3,0.

### Beispiel 17: Umsetzung von 1,1,3,3-Tetramethyldisiloxan und Diphenylsilan mit Hexanal (Synthese eines Siloxancopolymers)

0,50 g (3,74 mmol) 1,1,3,3-Tetramethyldisiloxan, 0,687 mg (3,73 mmol) Diphenylsilan, 1,49 g (14,9 mmol) Hexanal und 4,7 g Dichlormethan wurden gemischt und unter Rühren bei 20 °C mit einer Lösung von 1,4 mg (1,90 µmol, 0,022 mol-%) Cp*Si+ B(C₆F₅)₄⁻ in 1,1 g Dichlormethan versetzt. Man erwärmte die Lösung 22 Stunden auf 60 °C Badtemperatur, nach dieser Zeit war die Umsetzung vollständig (keine Si-H-Signale im ¹H-NMR-Spektrum nachweisbar). Die Reaktionslösung wurde im Vakuum eingedampft. GPC-Messung: Mₙ = 3.375, M_{w} = 7.755, D = 2,3.

### Beispiel 18: Umsetzung von 1,1,3,3-Tetramethyldisiloxan und 1,4-Bis(dimethylsilyl)benzol mit Hexanal (Synthese eines Siloxancopolymers)

0,52 g (3,74 mmol) 1,1,3,3-Tetramethyldisiloxan, 0,728 mg (3,74 mmol) 1,4-Bis(dimethylsilyl)benzol, 1,49 g (14,9 mmol) Hexanal und 3,1 g Dichlormethan wurden gemischt und unter Rühren bei 25 °C mit einer Lösung von 1,5 mg (1,78 µmol, 0,024 mol-%) Cp*Si⁺ B(C₆F₅)₄⁻ in 1,1 g Dichlormethan versetzt. Die Lösung erwärmte sich bis auf 40 °C und erreichte dann wieder Umgebungstemperatur (25 °C). Nach 22 Stunden Gesamtreaktionszeit war die Umsetzung vollständig (keine Si-H-Signale im ¹H-NMR-Spektrum nachweisbar). Die Reaktionslösung wurde im Vakuum eingedampft. GPC-Messung: Mₙ = 2.581,

M_{w} = 7.819, D = 3,0.

### Beispiel 19: Umsetzung von 1,4-Bis(dimethylsilyl)benzol mit Hexanal (Synthese eines Copolymers)

Unter Argonatmosphäre wurde eine Lösung von 3,50 g (18,0 mmol) 1,4-Bis(dimethylsilyl)benzol und 3,62 mg (36,1 mmol) Hexanal in 4,5 g Dichlormethan vorgelegt. Zu dieser Mischung wurden 3,3 mg (3,9 µmol, 0,02 mol-% bezogen auf 1,4-Bis(dimethylsilyl)benzol) Cp*Si⁺ B(C₆F₅)₄⁻ als Lösung in 1,1 g Dichlormethan langsam zugetropft. Nach 2 Stunden bei 50 °C war 1,4-Bis(dimethylsilyl)-benzol fast vollständig verbraucht. Es bildete sich das Polymer H-SiMe₂-[(1,4-Phenyl)-SiMe₂-O-SiMe₂-]ₙ(1,4-Phenyl)-SiMe₂H. Die Kettenlänge wurde durch Bestimmung der Si-H-Endgruppen im ¹H-NMR Spektrum bei δ = 4,44 ppm bestimmt, n = 220.

NMR-Daten des gebildeten Polymers:
¹H-NMR (CD₂Cl₂): δ = 0,37 (s, SiMe₂), 7,58 (s, Phenyl);
²⁹Si-NMR (CD₂Cl₂) : δ = - 1,12 ppm (Si-O-Phenyl-Kettenglied) .

## Patentansprüche

1. Verfahren zur Herstellung von Siloxanen, wobei
(a) mindestens eine Hydridosiliciumverbindung, die ausgewählt ist aus
(a1) Verbindungen der allgemeinen Formel (I)
**R¹R²R³Si-H** **(I),**
worin die Reste **R¹, R²** und **R³** unabhängig voneinander ausgewählt werden aus der Gruppe bestehend aus (i) Wasserstoff, (ii) Halogen, (iii) unsubstituierter oder substituierter C₁-C₂₀-Kohlenwasserstoffrest, und (iv) unsubstituierter oder substituierter C₁-C₂₀-Kohlenwasserstoffoxyrest, wobei zwei der Reste **R¹, R**² und **R³** auch miteinander einen monocyclischen oder polycyclischen, unsubstituierten oder substituierten C₂-C₂₀-Kohlenwasserstoffrest bilden können, wobei substituiert jeweils meint, dass der Kohlenwasserstoff- oder Kohlenwasserstoffoxyrest unabhängig voneinander mindestens eine der folgenden Substitutionen aufweist: ein Wasserstoffatom kann durch Halogen, **-CH(=O), -C≡N, -OR^{z},** - **SR^{z}, -NR^{z}₂,** und **-PR^{z}₂** ersetzt sein, eine CH₂-Gruppe kann durch **-O-, -S-** oder **-NR^{z}-** ersetzt sein, eine nicht direkt an Si gebundene CH₂-Gruppe kann durch eine Gruppierung - **C(=O)-** ersetzt sein, eine CH₃-Gruppe kann durch eine Gruppierung **-CH(=O)** ersetzt sein, und ein C-Atom kann durch ein Si-Atom ersetzt sein, worin **R^{z}** jeweils unabhängig voneinander ausgewählt wird aus der Gruppe bestehend aus C₁-C₆-Alkylrest und C₆-C₁₄-Arylrest; und/oder
(a2) Verbindungen der allgemeinen Formel (**I'**)
**(SiO_{4/2})ₐ(R^{x}SiO_{3/2})_{b}(HSiO_{3/2})_{b'}(R^{x}₂SiO_{2/2})_{c}(R^{x}HSiO_{2/2})_{c'}(H₂SiO_{2/2})_{c"} (R^{x}₃SiO_{1/2})_{d}(HR^{x}₂SiO_{1/2})_{d'}(H₂R^{x}SiO_{1/2})_{d"}(H₃SiO_{1/2})_{d‴}** **(I'),**
worin die Reste **R^{x}** unabhängig voneinander ausgewählt werden aus der Gruppe bestehend aus (i) Halogen, (ii) unsubstituierter oder substituierter C₁-C₂₀-Kohlenwasserstoffrest, und (iii) unsubstituierter oder substituierter C₁-C₂₀-Kohlenwasserstoffoxyrest, wobei substituiert jeweils meint, dass der Kohlenwasserstoffoder Kohlenwasserstoffoxyrest unabhängig voneinander mindestens eine der folgenden Substitutionen aufweist: ein Wasserstoffatom kann durch Halogen oder **-CH(=O)** ersetzt sein, eine CH₂-Gruppe kann durch **-O-** oder **-NR^{z}-** ersetzt sein, worin **R^{z}** jeweils unabhängig voneinander ausgewählt wird aus der Gruppe bestehend aus C₁-C₆-Alkylrest und C₆-C₁₄-Arylrest, eine nicht direkt an Si gebundene CH₂-Gruppe kann durch eine Gruppierung **-C(=O)-** ersetzt sein, und eine CH₃-Gruppe kann durch eine Gruppierung **-CH(=O)** ersetzt sein,;
und worin die Indices **a, b, b', c, c', c", d, d', d"** , **d‴** die Anzahl der jeweiligen Siloxaneinheit in der Verbindung angeben und unabhängig voneinander eine ganze Zahl im Bereich von 0 bis 100.000 bedeuten, mit der Maßgabe, dass die Summe aus **a, b, b', c, c', c", d, d'**, **d", d‴** zusammen mindestens den Wert 2 annimmt und wenigstens einer der Indices **b', c', c" , d', d"** oder **d‴** ungleich 0 ist; und
(b) mindestens eine Carbonylverbindung, die ausgewählt ist aus
(b1) Verbindungen der allgemeinen Formel (**II**)
**R^{y}-C(=O)-R^{z}** **(II),**
worin **R^{y}** ausgewählt wird aus der Gruppe bestehend aus (i) Wasserstoff, (ii) unsubstituierter oder substituierter C₁-C₂₀-Kohlenwasserstoffrest, und (iii) unsubstituierter oder substituierter C₁-C₂₀-Kohlenwasserstoffoxyrest;
und worin **R^{z}** ausgewählt wird aus der Gruppe bestehend aus (i) Wasserstoff und (ii) unsubstituierter oder substituierter C₁-C₂₀-Kohlenwasserstoffrest; und/oder
(b2) Verbindungen der allgemeinen Formel (**II'**)
**(SiO_{4/2})ₐ(R^{x}SiO_{3/2})_{b}(R^{a}SiO_{3/2})_{b'}(R^{x}₂SiO_{2/2})_{c}(R^{x}R^{a}SiO_{2/2})_{c'}(R^{a}₂SiO_{2/2})_{c} "**(R^{x}₃SiO_{1/2})**_{d}(R^{a}R^{x}₂SiO_{1/2})_{d'}(R^{a}₂R^{x}SiO_{1/2})d"(R^{a}₃SiO_{1/2})_{d‴}** **(II'),**
worin die Reste **R^{a}** unabhängig voneinander einen substituierten C₂-C₂₀-Kohlenwasserstoffrest bedeuten, wobei substituiert meint, dass der Kohlenwasserstoffrest unabhängig voneinander mindestens eine der folgenden Substitutionen aufweist: eine nicht direkt an Si gebundene CH₂-Gruppe kann durch eine Gruppierung **-C(=O)-** oder **-O-C(=O)-** ersetzt sein, ein Wasserstoffatom kann durch eine Gruppierung **-CH(=O)** ersetzt sein, und eine CH₃-Gruppe kann durch eine Gruppierung **-CH(=O)** ersetzt sein, optional kann der Kohlenwasserstoffrest folgende weitere Substitutionen aufweisen: ein Wasserstoffatom kann durch Halogen ersetzt sein, eine CH₂-Gruppe kann durch **-O-** oder **-NR^{z}-** ersetzt sein, worin **R^{z}** jeweils unabhängig voneinander ausgewählt wird aus der Gruppe bestehend aus C₁-C₆-Alkylrest und C₆-C₁₄-Arylrest;
und worin die Reste **R^{x}** unabhängig voneinander ausgewählt werden aus der Gruppe bestehend aus (i) Halogen, (ii) Wasserstoff, (iii) unsubstituierter oder substituierter C₁-C₂₀-Kohlenwasserstoffrest, und (iv) unsubstituierter oder substituierter C₁-C₂₀-Kohlenwasserstoffoxyrest, wobei substituiert jeweils meint, dass der Kohlenwasserstoffoder Kohlenwasserstoffoxyrest unabhängig voneinander mindestens eine der folgenden Substitutionen aufweist: ein Wasserstoffatom kann durch Halogen ersetzt sein, eine CH₂-Gruppe kann durch **-O-** oder **-NR^{z}-** ersetzt sein, worin **R^{z}** jeweils unabhängig voneinander ausgewählt wird aus der Gruppe bestehend aus C₁-C₆-Alkylrest und C₆-C₁₄-Arylrest; und worin die Indices **a, b, b', c, c', c", d, d', d"** , **d‴** die Anzahl der jeweiligen Siloxaneinheit in der Verbindung angeben und unabhängig voneinander eine ganze Zahl im Bereich von 0 bis 100.000 bedeuten, mit der Maßgabe, dass die Summe aus **a, b, b', c, c', c", d, d'**, **d", d‴** zusammen mindestens den Wert 2 annimmt und wenigstens einer der Indices **b', c', c", d', d"** oder **d‴** ungleich 0 ist; und
(c) mindestens eine kationische Verbindung der allgemeinen Formel (**III**)
**([M(II)Cp]⁺)ₐ X^{a-}** **(III),**
worin **M** ausgewählt ist aus der Gruppe bestehend aus Silicium und Germanium, und **Cp** ein π-gebundener Cyclopentadienylrest der allgemeinen Formel (**IIIa**) ist 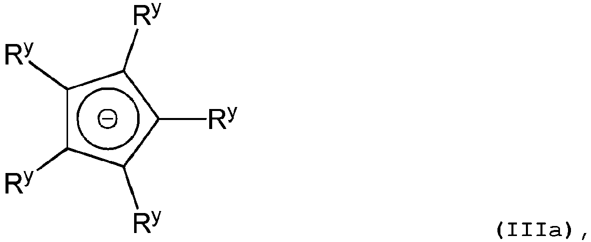
worin die Reste **R^{y}** unabhängig voneinander ausgewählt werden aus der Gruppe bestehend aus (i) Triorganosilylrest der Formel **-SiR^{b}₃,** worin die Reste **R^{b}** unabhängig voneinander C₁-C₂₀-Kohlenwasserstoffrest bedeuten, (ii) Wasserstoff, (iii) unsubstituierter oder substituierter C₁-C₂₀-Kohlenwasserstoffrest, und (iv) unsubstituierter oder substituierter C₁-C₂₀-Kohlenwasserstoffoxyrest, wobei auch jeweils zwei Reste **R^{y}** miteinander einen monocyclischen oder polycyclischen C₂-C₂₀-Kohlenwasserstoffrest bilden können, und wobei substituiert jeweils meint, dass im Kohlenwasserstoff- oder Kohlenwasserstoffoxyrest auch mindestens ein C-Atom durch ein Si-Atom ersetzt sein kann,
**X^{a-}** ein **a** wertiges Anion bedeutet und
**a** die Werte 1, 2 oder 3 annehmen kann;
in Kontakt gebracht und zur Reaktion gebracht werden.

2. Verfahren nach Anspruch 1, wobei in Formel (I) die Reste **R¹, R²** und **R³** unabhängig voneinander ausgewählt werden aus der Gruppe bestehend aus (i) Wasserstoff, (ii) Chlor, (iii) unsubstituierter oder substituierter C₁-C₁₂-Kohlenwasserstoffrest, und (iv) unsubstituierter oder substituierter C₁-C₁₂-Kohlenwasserstoffoxyrest; und wobei in Formel (**I'**) die Reste **R^{x}** unabhängig voneinander ausgewählt werden aus der Gruppe bestehend aus (i) Chlor, (ii) C₁-C₆-Alkylrest, (iii) Phenyl, und (iv) C₁-C₆-Alkoxyrest, und die Indices **a, b, b', c, c', c", d, d'**, **d", d‴** werden unabhängig voneinander ausgewählt aus einer ganzen Zahl im Bereich von 0 bis 1.000.

3. Verfahren nach Anspruch 2, wobei in Formel (I) die Reste **R¹, R²** und **R³** unabhängig voneinander ausgewählt werden aus der Gruppe bestehend aus (i) Wasserstoff, (ii) Chlor, (iii) C₁-C₆-Alkylrest, (iv) Phenyl, und (v) C₁-C₆-Alkoxyrest; und wobei in Formel **(I')** die Reste **R^{x}** unabhängig voneinander ausgewählt werden aus der Gruppe bestehend aus Chlor, Methyl, Methoxy, Ethyl, Ethoxy, n-Propyl, n-Propoxy, und Phenyl, und die Indices **a, b, b'**, **c, c', c", d, d', d", d‴** unabhängig voneinander ausgewählt werden aus einer ganzen Zahl im Bereich von 0 bis 1.000.

4. Verfahren nach Anspruch 3, wobei in Formel (I) die Reste **R¹, R²** und **R³** und in Formel (**I'**) die Reste **R^{x}** unabhängig voneinander ausgewählt werden aus der Gruppe bestehend aus Wasserstoff, Chlor, Methyl, Methoxy, Ethyl, Ethoxy, n-Propyl, n-Propoxy, und Phenyl, und wobei die Indices **a, b**, **b', c, c', c", d, d', d'', d‴** unabhängig voneinander ausgewählt werden aus einer ganzen Zahl im Bereich von 0 bis 1.000.

5. Verfahren nach einem der Ansprüche 1-4, wobei in Formel (**II**) die Reste **R^{y}** ausgewählt werden aus der Gruppe bestehend aus (i) Wasserstoff, (ii) unsubstituierter oder substituierter C₁-C₈-Kohlenwasserstoffrest, (iii) unsubstituierter oder substituierter C₁-C₈-Kohlenwasserstoffoxyrest, und wobei die Reste **R^{z}** ausgewählt werden aus der Gruppe bestehend aus (i) Wasserstoff und (ii) unsubstituierter C₁-C₈-Kohlenwasserstoffrest; und wobei in Formel (**II'**) die Reste **R^{a}** ausgewählt werden aus der Gruppe bestehend aus substituierten C₁-C₈-Kohlenwasserstoffresten, und wobei die Reste **R^{x}** ausgewählt werden aus (i) unsubstituierter C₁-C₈-Kohlenwasserstoffrest und (ii) unsubstituierter C₁-C₈-Kohlenwasserstoffoxyrest.

6. Verfahren nach Anspruch 5, wobei in Formel (**II**) die Reste **R^{y}** ausgewählt werden aus der Gruppe bestehend aus (i) Wasserstoff, (ii) C₁-C₈-Alkylrest und (iii) C₁-C₈-Alkoxyrest, und worin die Reste **R^{z}** ausgewählt werden aus der Gruppe bestehend aus (i) Wasserstoff, (ii) C₁-C₈-Alkylrest und (iii) Phenylrest; und wobei in Formel (**II'**) die Reste **R^{a}** ausgewählt werden aus der Gruppe bestehend aus substituierten C₁-C₈-Kohlenwasserstoffresten, und wobei die Reste **R^{x}** ausgewählt werden aus unsubstituierter C₁-C₈-Kohlenwasserstoffrest.

7. Verfahren nach einem der Ansprüche 1-6, wobei in Formel (**IIIa**) die Reste **R^{y}** unabhängig voneinander ausgewählt werden aus der Gruppe bestehend aus (i) C₁-C₃-Alkylrest, (ii) Wasserstoff und (iii) Triorganosilylrest der Formel - **SiR^{b}₃,** worin die Reste **R^{b}** unabhängig voneinander C₁-C₂₀-Alkylrest bedeuten.

8. Verfahren nach einem der Ansprüche 1-6, wobei in Formel (**III**) die Anionen **X⁻** ausgewählt werden aus der Gruppe bestehend aus den Verbindungen der Formeln **[B(R^{a})₄]⁻** und **[Al(R^{a})₄]⁻,** worin die Reste **R^{a}** jeweils unabhängig voneinander ausgewählt werden aus aromatischer C₆-C₁₄-Kohlenwasserstoffrest, bei dem mindestens ein Wasserstoffatom unabhängig voneinander durch einen Rest ausgewählt aus der Gruppe bestehend aus (i) Fluor, (ii) perfluorierter C₁-C₆-Alkylrest, und (iii) Triorganosilylrest der Formel **-SiR^{b}₃,** worin die Reste **R^{b}** unabhängig voneinander C₁-C₂₀-Alkylrest bedeuten, substituiert ist.

9. Verfahren nach Anspruch 8, wobei in Formel (**III**) die Anionen **X⁻** ausgewählt werden aus der Gruppe bestehend aus den Verbindungen der Formel **[B(R^{a})₄]⁻,** worin die Reste **R^{a}** unabhängig voneinander ausgewählt werden aus aromatischer C₆-C₁₄-Kohlenwasserstoffrest, bei dem alle Wasserstoffatome unabhängig voneinander durch einen Rest, ausgewählt aus der Gruppe bestehend aus (i) Fluor und (ii) Triorganosilylrest der Formel **-SiR^{b}₃,** worin die Reste **R^{b}** unabhängig voneinander C₁-C₂₀-Alkylrest bedeuten, substituiert sind.

10. Verfahren nach einem der Ansprüche 1-6, wobei die kationische Verbindung der Formel (**III**) ausgewählt wird aus der Gruppe bestehend aus **Cp*M⁺ B(C₆F₅)₄⁻; Cp*M⁺ B[C₆F₄(4-TBS)]₄⁻,** mit TBS = **SiMe₂*tert*-Butyl; Cp*M' B(2-NaphF)**₄⁻, mit 2-NaphF = perfluorierter 2-Naphthylrest; und
**Cp*M⁺ B**[**(C₆F₅)**₃**(2-NaphF)]**⁻, mit 2-NaphF = perfluorierter 2-Naphthylrest, wobei **M** ausgewählt ist aus der Gruppe bestehend aus Silicium und Germanium, wobei Cp* Pentamethylcyclopentadienyl bedeutet.

## Claims

1. Process for preparing siloxanes, wherein
(a) at least one hydridosilicon compound selected from
(a1) compounds of general formula (**I**)
**R¹R²R³Si-H** **(I)**,
where the radicals **R¹, R²** and **R³** are each independently selected from the group consisting of (i) hydrogen, (ii) halogen, (iii) unsubstituted or substituted C₁-C₂₀-hydrocarbon radical, and (iv) unsubstituted or substituted C₁-C₂₀-hydrocarbonoxy radical, wherein two of the radicals **R¹, R²** and **R³** may also form with each other a monocyclic or polycyclic, unsubstituted or substituted C₂-C₂₀-hydrocarbon radical, wherein substituted means in each case that the hydrocarbon or hydrocarbonoxy radical each independently has at least one of the following substitutions: a hydrogen atom may be replaced by halogen, **-CH(=O), -C≡N, -OR^{z}, -SR^{z},** - **NR^{z}₂,** and **-PR^{z}₂,** a CH₂ group may be replaced by -O-, **-S-** or **-NR^{z}-,** a CH₂ group not directly bonded to Si may be replaced by a **-C(=O)-** moiety, a CH₃ group may be replaced by a **-CH(=O)** moiety, and a carbon atom may be replaced by a Si atom, where **R^{z}** is each independently selected from the group consisting of C₁-C₆-alkyl radical and C₆-C₁₄-aryl radical; and/or
(a2) compounds of general formula (**I'**)
**(SiO_{4/2})ₐ(R^{x}SiO_{3/2})_{b}(HSiO_{3/2})_{b}'(R^{x}₂SiO_{2/2})_{c}(R^{x}HSiO_{2/2})_{c'}(H₂ SiO_{2/2})_{c"}(R^{x}₃SiO_{1/2})_{d}(HR^{x}2SiO_{1/2})_{d'}(H₂R^{x}SiO_{1/2})_{d"}-(H₃SiO_{1/2}) _{d‴}** **(I'),**
where the radicals **R^{x}** are each independently selected from the group consisting of (i) halogen, (ii) unsubstituted or substituted C₁-C₂₀-hydrocarbon radical, and (iii) unsubstituted or substituted C₁-C₂₀-hydrocarbonoxy radical, wherein substituted means in each case that the hydrocarbon or hydrocarbonoxy radical each independently has at least one of the following substitutions: a hydrogen atom may be replaced by halogen or **-CH(=O)**, a CH₂ group may be replaced by **-O-** or **-NR^{z}-,** where **R^{z}** is in each case independently selected from the group consisting of C₁-C₆-alkyl radical and C₆-C₁₄-aryl radical, a CH₂ group not directly bonded to Si may be replaced by a **-C(=O)-** moiety, and a CH₃ group may be replaced by a **-CH(=O)** moiety;
and where the indices **a, b, b', c, c', c", d, d'**, **d",d‴** indicate the number of the respective siloxane unit in the compound and is each independently an integer in the range of 0 to 100 000, with the proviso that the sum of **a, b, b', c**, **c', c", d, d', d", d‴** together has at least the value 2 and at least one of the indices **b', c', c"**, **d', ct"** or **d‴** is not equal to 0; and
(b) at least one carbonyl compound selected from
(b1) compounds of general formula (**II**)
**R^{y}-C(=O)-R^{z}** (**II**),
where **R^{y}** is selected from the group consisting of (i) hydrogen, (ii) unsubstituted or substituted C₁-C₂₀-hydrocarbon radical, and (iii) unsubstituted or substituted C₁-C₂₀-hydrocarbonoxy radical;
and where **R^{z}** is selected from the group consisting of (i) hydrogen and (ii) unsubstituted or substituted C₁-C₂₀-hydrocarbon radical; and/or
(b2) compounds of general formula (**II**')
**(SiO_{4/2})ₐ(R^{x}SiO_{3/2})_{b}(R^{a}SiO_{3/2})_{b'}(R^{x}₂SiO_{2/2})_{c}(R^{x}R^{a}SiO_{2/2})_{c'}(R ^{a}₂SiO_{2/2})_{c"}(R^{x}₃SiO_{1/2})a(R^{a}R^{x}₂SiO_{1/2})_{d'}(R^{a}₂R^{x}SiO_{1/2})_{d"}(R^{a}₃Si O_{1/2})_{d‴}** **(II')**,
where the radicals **R^{a}** are each independently a substituted C₂-C₂₀-hydrocarbon radical, wherein substituted means that the hydrocarbon radical each independently has at least one of the following substitutions: a CH₂ group not directly bonded to Si may be replaced by a **-C(=O)-** or **-OC(=O)-** moiety, a hydrogen atom may be replaced by a **-CH(=O)** moiety, and a CH₃ group may be replaced by a **-CH(=O)** moiety, the hydrocarbon radical may optionally have the following further substitutions: a hydrogen atom may be replaced by halogen, a CH₂ group may be replaced by **-O-** or **-NR^{z}-,** where **R^{z}** is in each case independently selected from the group consisting of C₁-C₆-alkyl radical and C₆-C₁₄-aryl radical;
and where the radicals **R^{x}** are each independently selected from the group consisting of (i) halogen, (ii) hydrogen, (iii) unsubstituted or substituted C₁-C₂₀-hydrocarbon radical, and (iv) unsubstituted or substituted C₁-C₂₀-hydrocarbonoxy radical, wherein substituted means in each case that the hydrocarbon or hydrocarbonoxy radical each independently has at least one of the following substitutions: a hydrogen atom may be replaced by halogen, a CH₂ group may be replaced by **-O-** or **-NR^{z}-**, where **R^{z}** is in each case independently selected from the group consisting of C₁-C₆-alkyl radical and C₆-C₁₄-aryl radical;
and where the indices **a, b, b', c, c', c", d, d'**, **d", d‴** indicate the number of the respective siloxane unit in the compound and is each independently an integer in the range of 0 to 100 000, with the proviso that the sum of **a, b, b', c**, **c', c", d, d', d", d‴** together has at least the value 2 and at least one of the indices **b', c', c"**, **d', ct"** or **d‴** is not equal to 0; and
(c) at least one cationic compound of general formula (**III**)
**([M(II)Cp]⁺)ₐ X^{a-}** **(III),**
where **M** is selected from the group consisting of silicon, and germanium, and **Cp** is a π-bonded cyclopentadienyl radical of general formula (**IIIa**) 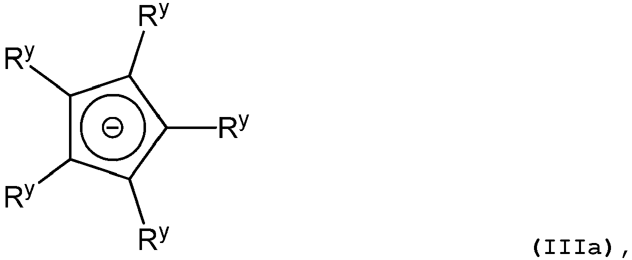
where the radicals **R^{y}** are each independently selected from the group consisting of (i) triorganosilyl radical of formula **-SiR^{b}₃,** where the radicals **R^{b}** are each independently C₁-C₂₀-hydrocarbon radical, (ii) hydrogen, (iii) unsubstituted or substituted C₁-C₂₀-hydrocarbon radical, and (iv) unsubstituted or substituted C₁-C₂₀-hydrocarbonoxy radical, wherein two radicals **R^{y}** may also in each case form with each other a monocyclic or polycyclic C₂-C₂₀-hydrocarbon radical, and wherein substituted means in each case that in the hydrocarbon or hydrocarbonoxy radical at least one carbon atom may also be replaced by one Si atom,
**X^{a-}** is an **a** valent anion and
**a** can take the values 1, 2 or 3;
are brought into contact and reacted.

2. Process according to Claim 1, wherein in formula (**I**) the radicals **R¹, R²** and **R³** are each independently selected from the group consisting of (i) hydrogen, (ii) chlorine, (iii) unsubstituted or substituted C₁-C₁₂-hydrocarbon radical, and (iv) unsubstituted or substituted C₁-C₁₂-hydrocarbonoxy radical; and wherein in formula (**I'**) the radicals **R^{x}** are each independently selected from the group consisting of (i) chlorine, (ii) C₁-C₆-alkyl radical, (iii) phenyl, and (iv) C₁-C₆-alkoxy radical, and the indices **a, b, b', c, c', c", d, d', d", d‴** are each independently selected from an integer in the range of 0 to 1000.

3. Process according to Claim 2, wherein in formula (**I**) the radicals **R¹, R²** and **R³** are each independently selected from the group consisting of (i) hydrogen, (ii) chlorine, (iii) C₁-C₆-alkyl radical, (iv) phenyl, and (v) C₁-C₆-alkoxy radical; and wherein in formula (**I'**) the radicals **R^{x}** are each independently selected from the group consisting of chlorine, methyl, methoxy, ethyl, ethoxy, n-propyl, n-propoxy and phenyl, and the indices **a, b, b', c, c', c"**, **d, d', d", d‴** are each independently selected from an integer in the range of 0 to 1000.

4. Process according to Claim 3, wherein in formula (**I**) the radicals **R¹, R²** and **R³** and in formula (**I'**) the radicals **R^{x}** are each independently selected from the group consisting of hydrogen, chlorine, methyl, methoxy, ethyl, ethoxy, n-propyl, n-propoxy and phenyl, and wherein the indices **a, b, b', c, c', c", d, d', d", d‴** are each independently selected from an integer in the range of 0 to 1000.

5. Process according to any of Claims 1-4, wherein in formula (**II**) the radicals **R^{y}** are selected from the group consisting of (i) hydrogen, (ii) unsubstituted or substituted C₁-C₈-hydrocarbon radical, (iii) unsubstituted or substituted C₁-C₈-hydrocarbonoxy radical, and wherein the radicals **R^{z}** are selected from the group consisting of (i) hydrogen and (ii) unsubstituted C₁-C₈-hydrocarbon radical; and wherein in formula (**II'**) the radicals **R^{a}** are selected from the group consisting of substituted C₁-C₈-hydrocarbon radicals, and wherein the radicals **R^{x}** are selected from (i) unsubstituted C₁-C₈-hydrocarbon radical and (ii) unsubstituted C₁-C₈-hydrocarbonoxy radical.

6. Process according to Claim 5, wherein in formula (**II**) the radicals **R^{y}** are selected from the group consisting of (i) hydrogen, (ii) C₁-C₈-alkyl radical and (iii) C₁-C₈-alkoxy radical, and where the radicals **R^{z}** are selected from the group consisting of (i) hydrogen, (ii) C₁-C₈-alkyl radical and (iii) phenyl radical; and wherein in formula (**II'**) the radicals **R^{a}** are selected from the group consisting of substituted C₁-C₈-hydrocarbon radicals, and wherein the radicals **R^{x}** are selected from unsubstituted C₁-C₈-hydrocarbon radicals.

7. Process according to any of Claims 1-6, wherein in formula (**IIIa**) the radicals **R^{y}** are each independently selected from the group consisting of (i) C₁-C₃-alkyl radical, (ii) hydrogen and (iii) triorganosilyl radical of formula **-SiR^{b}₃,** where the radicals **R^{b}** are each independently C₁-C₂₀-alkyl radicals.

8. Process according to any of Claims 1-6, wherein in formula (**III**) the anions **X⁻** are selected from the group consisting of the compounds of the formulae **[B(R^{a})₄]⁻** and **[Al(R^{a})₄]⁻,** where the radicals **R^{a}** are each independently selected from aromatic C₆-C₁₄-hydrocarbon radicals, in which at least one hydrogen atom has been each independently substituted by a radical selected from the group consisting of (i) fluorine, (ii) perfluorinated C₁-C₆-alkyl radical, and (iii) triorganosilyl radical of the formula - **SiR^{b}₃,** where the radicals **R^{b}** are each independently C₁-C₂₀-alkyl radicals.

9. Process according to Claim 8, wherein in formula (**III**) the anions **X⁻** are selected from the group consisting of the compounds of formula **[B(R^{a})₄]⁻,** where the radicals **R^{a}** are each independently selected from aromatic C₆-C₁₄-hydrocarbon radicals, in which all hydrogen atoms have been each independently substituted by a radical selected from the group consisting of (i) fluorine and (ii) triorganosilyl radical of formula **-SiR^{b}₃,** where the radicals **R^{b}** are each independently C₁-C₂₀-alkyl radicals.

10. Process according to any of Claims 1-6, wherein the cationic compound of formula (**III**) is selected from the group consisting of **Cp*M⁺ B(C₆F₅)₄⁻; Cp*M⁺ B[C₆F₄(4-TBS)]₄⁻,** where TBS = SiMe₂*tert*-butyl; **Cp*M⁺ B(2-NaphF)₄⁻,** where 2-NaphF = perfluorinated 2-naphthyl radical; and
**Cp*M⁺ B[(C₆F₅)₃(2-NaphF)]⁻,** where 2-NaphF = perfluorinated 2-naphthyl radical, wherein **M** is selected from the group consisting of silicon and germanium, wherein Cp* is pentamethylcyclopentadienyl.

## Revendications

1. Procédé de préparation de siloxanes, dans lequel
(a) au moins un composé hydridosilicium, qui est choisi parmi
(a1) les composés de Formule générale (**I**)
**R¹R²R³Si-H** **(I)**,
dans laquelle les radicaux **R¹, R²** et **R³** sont indépendamment les uns des autres choisis dans le groupe consistant en (i) un hydrogène, (ii) un halogène, (iii) un radical hydrocarboné en C₁-C₂₀ non substitué ou substitué, et (iv) un radical hydrocarboxy en C₁-C₂₀ non substitué ou substitué, deux des radicaux **R¹, R²** et **R³** pouvant aussi former les uns avec les autres un radical hydrocarboné en C₂-C₂₀ monocyclique ou polycyclique, non substitué ou substitué, substitué signifiant dans chaque cas que le radical hydrocarboné ou hydrocarboxy présente, indépendamment les unes des autres, au moins l'une des substitutions suivantes : un atome d'hydrogène peut être remplacé par un halogène, **-CH(=O), -C≡N, -OR^{z}, -SR^{z}, -NR^{z}₂** et **-PR^{z}₂,** un groupe CH₂ peut être remplacé par **-O-, -S-** ou **-NR^{z}-,** un groupe CH₂ non directement lié à Si peut être remplacé par un groupement **-C(=O)-,** un groupe CH₃ peut être remplacé par un groupement **-CH(=O)** et un atome C peut être remplacé par un atome Si, **R^{z}** étant dans chaque cas choisi dans le groupe consistant en un radical alkyle en C₁-C₆ et un radical aryle en C₆-C₁₄ ; et/ou
(a2) les composés de Formule générale (**I'**)
**(SiO_{4/2})ₐ(R^{x}SiO_{3/2})_{b}(HSiO_{3/2})_{b'}(R^{x}₂SiO_{2/2})_{c}(R^{x}HSiO_{2/2})_{c'}(H₂SiO_{2/2})_{c"} (R^{x}₃SiO_{1/2})_{d}(HR^{x}₂SiO_{1/2})_{d'}(H₂R^{x}SiO_{1/2})_{d"}(H₃SiO_{1/2})_{d‴}** **(I'),**
dans laquelle les radicaux **R^{x}** sont indépendamment les uns des autres choisis dans le groupe consistant en (i) un halogène, (ii) un radical hydrocarboné en en C₁-C₂₀ non substitué ou substitué et (iii) un radical hydrocarboxy en C₁-C₂₀ non substitué ou substitué, substitué signifiant dans chaque cas que le radical hydrocarboné ou hydrocarboxy présente indépendamment les unes des autres au moins l'une des substitutions suivantes : un atome d'hydrogène peut être remplacé par un halogène ou **-CH(=O),** un groupe CH₂ peut être remplacé par **-O-** ou **-NR^{z}-, R^{z}** étant chacun indépendamment des uns des autres choisi dans le groupe consistant en un radical alkyle en C₁-C₆ et un radical aryle en C₆-C₁₄, un groupe CH₂ non lié directement à Si peut être remplacé par un groupement **-C(=O)-,** et un groupe CH₃ peut être remplacé par un groupement **-CH(=O)** ;
et dans laquelle les indices **a, b, b', c, c', c", d, d', d", d‴** indiquent le nombre du motif siloxane considéré dans le composé et, indépendamment les uns des autres, représentent un nombre entier dans la plage de 0 à 100 000, à la condition que la somme de **a, b, b', c, c', c", d, d', d", d‴** vaille au moins 2, et qu'au moins l'un des indices **b', c', c", d', d"** ou **d‴** soit différent de 0 ; et
(b) au moins un composé carbonyle, qui est choisi parmi
(b1) les composés de Formule générale (**II**)
**R^{y}-C(=O)-R^{z}** (**II**),
dans laquelle **R^{y}** est choisi dans le groupe consistant en (i) un hydrogène, (ii) un radical hydrocarboné en C₁-C₂₀ non substitué ou substitué, et (iii) un radical hydrocarboxy en C₁-C₂₀ non substitué ou substitué ;
et dans laquelle **R^{z}** est choisi dans le groupe consistant en (i) un hydrogène et (ii) un radical hydrocarboné en C₁-C₂₀ non substitué ou substitué ; et/ou
(b2) les composés de Formule générale (**II'**)
**(SiO_{4/2})ₐ(R^{x}SiO_{3/2})_{b}(R^{a}SiO_{3/2})_{b'}(R^{x}₂SiO_{2/2})_{c}(R^{x}R^{a}SiO_{2/2})_{c'}(R^{a}₂SiO_{2/2})_{c"} (R^{x}₃SiO_{1/2})_{d}(R^{a}R^{x}₂SiO_{1/2})_{d'}(R^{a}₂R^{x}SiO_{1/2})_{d"}(R^{a}₃SiO_{1/2})_{d‴}** **(II'),**
dans laquelle les radicaux **R^{a}** représentent indépendamment les uns des autres un radical hydrocarboné en C₂-C₂₀ substitué, substitué signifiant que le radical hydrocarboné présente indépendamment les unes des autres au moins l'une des substitutions suivantes : un groupe CH₂ non directement lié à Si peut être remplacé par un groupement **-C(=O)-** ou **-O-C(=O)-,** un atome d'hydrogène peut être remplacé par un groupement **-CH(=O)**, et un groupe CH₃ peut être remplacé par un groupement **-CH(=O),** éventuellement le radical hydrocarboné peut présenter les autres substitutions suivantes : un atome d'hydrogène peut être remplacé par un halogène, un groupe CH₂ peut être remplacé par **-O-** ou **-NR^{z}-, R^{z}** pouvant chacun indépendamment des autres être choisi dans le groupe consistant en un radical alkyle en C₁-C₆ et un radical aryle en C₆-C₁₄ ;
et dans laquelle les radicaux **R^{x}** sont indépendamment les uns des autres choisis dans le groupe consistant en (i) un halogène, (ii) un hydrogène, (iii) un radical hydrocarboné en C₁-C₂₀ non substitué ou substitué, et (iv) un radical hydrocarboxy en C₁-C₂₀ non substitué ou substitué, substitué signifiant dans chaque cas que le radical hydrocarboné ou hydrocarboxy présente indépendamment les unes des autres au moins l'une des substitutions suivantes : un atome d'hydrogène peut être remplacé par un halogène ; un groupe CH₂ peut être remplacé par **-O-** ou **-NR^{z}-, R^{z}** étant dans chaque cas indépendamment les uns des autres choisi dans le groupe consistant en un radical alkyle en C₁-C₆ et un radical aryle en C₆-C₁₄ ; et dans laquelle les indices **a, b, b', c, c', c", d, d', d", d‴** indiquent le nombre du motif siloxane considéré dans le composé et, indépendamment les uns des autres, représentent un nombre entier dans la plage de 0 à 100 000, à la condition que la somme de **a, b, b', c, c', c", d, d', d", d‴** vaille au moins 2 et qu'au moins l'un des indices **b', c', c", d', d" ou d‴** soit différent de 0 ; et
(c) au moins un composé cationique de Formule générale (**III**)
**([M(II)Cp]⁺)ₐ X^{a-}** **(III),**
dans laquelle **M** est choisi dans le groupe consistant en le silicium et le germanium, et **Cp** est un radical cyclopentadiényle à liaison π de Formule générale (**IIIa**) 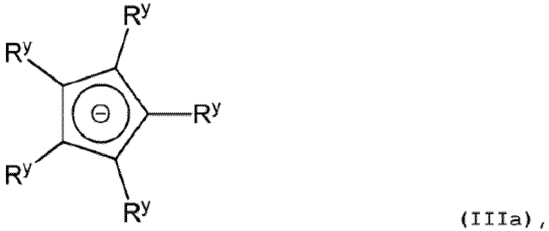
dans laquelle les radicaux **R^{y}** sont indépendamment les uns des autres choisis dans le groupe consistant en (i) un radical triorganosilyle de Formule **-SiR^{b}₃,** dans laquelle les radicaux **R^{b}** représentent indépendamment les uns des autres un radical hydrocarboné en C₁-C₂₀, (ii) un hydrogène, (iii) un radical hydrocarboné en C₁-C₂₀ non substitué ou substitué, et (iv) un radical hydrocarboxy en C₁-C₂₀ non substitué ou substitué, deux radicaux **R^{y}** pouvant aussi l'un avec l'autre former un radical hydrocarboné en C₂-C₂₀ monocyclique ou polycyclique, et substitué signifiant dans chaque cas que, dans le radical hydrocarboné ou hydrocarboxy, au moins un atome C peut aussi être remplacé par un atome Si,
**X^{a-}** représente un anion **a-**valent et
**a** peut prendre les valeurs 1, 2 ou 3 ;
sont mis en contact et sont mis à réagir.

2. Procédé selon la revendication 1, dans lequel, dans la Formule (**I**), les radicaux **R¹, R²** et **R³** sont indépendamment les uns des autres choisis dans le groupe consistant en (i) un hydrogène, (ii) un chlore, (iii) un radical hydrocarboné en C₁-C₁₂ non substitué ou substitué, et (iv) un radical hydrocarboxy en C₁-C₁₂ non substitué ou substitué ; et, dans la Formule (**I'**), les radicaux **R^{x}** étant indépendamment les uns des autres choisis dans le groupe consistant en (i) un chlore, (ii) un radical alkyle en C₁-C₆, (iii) un phényle et (iv) un radical alcoxy en C₁-C₆, et les indices **a, b, b', c, c', c", d, d', d", d‴** étant indépendamment les uns des autres choisis parmi un nombre entier dans la plage de 0 à 1 000.

3. Procédé selon la revendication 2, dans lequel, dans la Formule (**I**), les radicaux **R¹, R²** et **R³** sont indépendamment les uns des autres choisis dans le groupe consistant en (i) un hydrogène, (ii) un chlore, (iii) un radical alkyle en C₁-C₆, (iv) un phényle et (v) un radical alcoxy en C₁-C₆ ; et, dans la Formule (**I'**), les radicaux **R^{x}** étant indépendamment les uns des autres choisis le groupe consistant en un chlore, un méthyle, un méthoxy, un éthyle, un éthoxy, un n-propyle, un n-propoxy et un phényle, et les indices **a, b, b', c, c', c", d, d', d", d‴** étant indépendamment les uns des autres choisis parmi un nombre entier dans la plage de 0 à 1 000.

4. Procédé selon la revendication 3, dans lequel, dans la Formule (**I**), les radicaux **R¹, R²** et **R³** et, dans la Formule (**I'**), les radicaux **R^{x}** sont choisis indépendamment les uns des autres dans le groupe consistant en un hydrogène, un chlore, un méthyle, un méthoxy, un éthyle, un éthoxy, un n-propyle, un n-propoxy et un phényle, et les indices **a, b, b', c, c', c", d, d', d", d‴** étant indépendamment les uns des autres choisis parmi un nombre entier dans la plage de 0 à 1 000.

5. Procédé selon l'une des revendications 1 à 4, dans lequel dans la Formule (**II**) les radicaux **R^{y}** sont choisis dans le groupe consistant en (i) un hydrogène, (ii) un radical hydrocarboné en C₁-C₈ non substitué ou substitué, (iii) un radical hydrocarboxy en C₁-C₈ substitué ou non substitué, et les radicaux **R^{z}** étant choisis dans le groupe consistant en (i) un hydrogène et (ii) un radical hydrocarboné en C₁-C₈ non substitué ; et dans la Formule (**II'**), les radicaux **R^{a}** étant choisis dans le groupe consistant en les radicaux hydrocarbonés en C₁-C₈ substitués, et les radicaux **R^{x}** étant choisis parmi (i) un radical hydrocarboné en C₁-C₈ non substitué et (ii) un radical hydrocarboxy en C₁-C₈ non substitué.

6. Procédé selon la revendication 5, dans lequel, dans la Formule (**II**) les radicaux **R^{y}** sont choisis dans le groupe consistant en (i) un hydrogène, (ii) un radical alkyle en C₁-C₈ et (iii) un radical alcoxy en C₁-C₈, et dans laquelle les radicaux **R^{z}** sont choisis dans le groupe consistant en (i) un hydrogène, (ii) un radical alkyle en C₁-C₈ et (iii) un radical phényle ; et, dans la Formule (**II'**), les radicaux **R^{a}** étant choisis dans le groupe consistant en les radicaux hydrocarbonés en C₁-C₈ substitués, et les radicaux **R^{x}** étant choisis parmi un radical hydrocarboné en C₁-C₈ non substitué.

7. Procédé selon l'une des revendications 1 à 6, dans lequel, dans la Formule (**IIIa**), les radicaux **R^{y}** sont indépendamment les uns des autres choisis dans le groupe consistant en (i) un radical alkyle en C₁-C₃, (ii) un hydrogène et (iii) un radical triorganosilyle de formule **-SiR^{b}₃,** dans laquelle les radicaux **R^{b}** représentent indépendamment les uns des autres un radical alkyle en C₁-C₂₀.

8. Procédé selon l'une des revendications 1 à 6, dans lequel, dans la Formule (**III**), les anions **X⁻** sont choisis dans le groupe consistant en les composés de formules **[B(R^{a})₄]⁻** et **[Al(R^{a})₄]⁻**, dans lesquelles les radicaux **R^{a}** sont chacun choisis indépendamment les uns des autres parmi un radical hydrocarboné aliphatique en C₆-C₁₄, dans lequel au moins un atome d'hydrogène est indépendamment les uns des autres substitué par un radical choisi dans le groupe consistant en (i) un fluor, (ii) un radical alkyle en C₁-C₆ perfluoré et (iii) un radical triorganosilyle de formule **-SiR^{b}₃,** dans laquelle les radicaux **R^{b}** représentent indépendamment les uns des autres un radical alkyle en C₁-C₂₀.

9. Procédé selon la revendication 8, dans lequel, dans la Formule (**III**), les anions **X⁻** sont choisis dans le groupe consistant en les composés de formule **[B(R^{a})₄]⁻**, dans laquelle les radicaux **R^{a}** sont indépendamment les uns des autres choisis parmi un radical hydrocarboné en C₆-C₁₄, dans lequel tous les atomes d'hydrogène sont indépendamment les uns des autres substitués par un radical choisi dans le groupe consistant en (i) un fluor et (ii) un radical triorganosilyle de formule **-SiR^{b}₃,** dans laquelle les radicaux **R^{b}** représentent indépendamment les uns des autres un radical alkyle en C₁-C₂₀.

10. Procédé selon l'une des revendications 1 à 6, dans lequel le composé cationique de Formule (**III**) est choisi dans le groupe consistant en **Cp*M⁺ B(C₆F₅)₄⁻** ; **Cp*M⁺ B[C₆F₄(4-TBS)]₄⁻**, avec TBS = **SiMe₂*tert*-butyle** ; **Cp*M⁺ B(2-NaphF)₄⁻**, avec 2-NaphF = radical 2-naphtyle perfluoré ; et
**Cp*M⁺ B[(C₆F₅)₃(2-NaphF)]⁻**, avec 2-NaphF = radical 2-naphtyle perfluoré, **M** étant choisi dans le groupe consistant en le silicium et le germanium, Cp* représentant un pentaméthylcyclopentadiényle.
